(19) Europäisches Patentamt
European Patent Office
Office européen des brevets

(11) EP 2 755 391 A1

(12) EUROPEAN PATENT APPLICATION
published in accordance with Art. 153(4) EPC

(43) Date of publication:
16.07.2014 Bulletin 2014/29

(51) Int Cl.:
H04N 13/04 (2006.01)

(21) Application number: 12830848.3

(86) International application number:
PCT/JP2012/069216

(22) Date of filing: 27.07.2012

(87) International publication number:
WO 2013/035457 (14.03.2013 Gazette 2013/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.09.2011 JP 2011195070

(71) Applicant: Sharp Kabushiki Kaisha
Osaka-shi, Osaka 545-8522 (JP)

(72) Inventors:
• TSUBAKI, Ikuko
  Osaka-shi, Osaka 545-8522 (JP)

• SETO, Mikio
  Osaka-shi, Osaka 545-8522 (JP)
• HATTORI, Hisao
  Osaka-shi, Osaka 545-8522 (JP)
• KUMAI, Hisao
  Osaka-shi, Osaka 545-8522 (JP)

(74) Representative: Müller - Hoffmann & Partner
Patentanwälte
St.-Martin-Strasse 58
81541 München (DE)

(54) **STEREOSCOPIC IMAGE PROCESSING APPARATUS, STEREOSCOPIC IMAGE PROCESSING METHOD, AND PROGRAM**

(57) There is provided a stereoscopic image processing apparatus with which a disparity can be correctly estimated , even for an image in which a disparity has a vertical component. A stereoscopic image processing apparatus (10) includes an input unit (11) that receives a plurality of viewpoint images, an evaluation value calculation unit (12) that calculates, for a plurality of viewpoint images that have been received, an evaluation value relating to pixel similarity between viewpoint images and disparity continuity between viewpoint images, and a disparity map creation unit (13) that selects a combination of disparities of each pixel, for which the evaluation value that has been calculated is a minimum evaluation value, as a disparity of the pixel and creates a disparity map having a horizontal component and a vertical component. Here, the disparity continuity is continuity between a disparity of a pixel of interest and a disparity of a pixel horizontally adjacent to the pixel of interest and/or a disparity of a pixel vertically adjacent to the pixel of interest, and the evaluation value that is calculated by the evaluation value calculation unit (12) becomes smaller as the pixel similarity increases and becomes smaller as the disparity continuity increases.

FIG. 3

EP 2 755 391 A1

## Description

Technical Field

The present invention relates to a stereoscopic image processing apparatus, a stereoscopic image processing method, and a program with which a disparity between viewpoint images can be estimated.

Background Art

In a stereoscopic image constituted by two viewpoint images, that is, a left-eye image and a right-eye image, a difference in the coordinates of an object between viewpoint images is called a disparity, which varies in accordance with the distance between the object and a camera. The depth of an object can be obtained from a disparity using a transformation equation derived from a geometric arrangement in viewpoint images and therefore a disparity is used as depth information.

In a description given below, a disparity is described such that a disparity becomes larger the nearer an object is located and a disparity becomes smaller the further away an object is located. A disparity has a positive value in the case where a point in a left-eye image is positioned rightward relative to the position of a corresponding point in a right-eye image. Similarly, a disparity has a negative value in the case where a point in a right-eye image is positioned rightward relative to the position of a corresponding point in a left-eye image.

Disparity estimation is processing of outputting a disparity by obtaining corresponding points in viewpoint images for each pixel in the viewpoint images. An image in which a disparity of each pixel obtained by disparity estimation is expressed as a pixel value is called a disparity map. As examples of a disparity estimation technique, various techniques using block matching, dynamic programming, graph cut, or the like have been proposed. As a matter of course, the number of viewpoint images is not limited to two and a disparity among three or more viewpoint images (for example, a disparity of a viewpoint image relative to another viewpoint image that serves as a reference) can be estimated.

PTL 1 discloses a technique of estimating a disparity map that is smooth and has fewer errors by applying dynamic programming while using disparity continuity in the horizontal direction and in the vertical direction as a constraint condition. NPL 1 discloses a technique of identifying an occlusion region in the horizontal direction simultaneously with disparity estimation, by using dynamic programming. An occlusion region is a background region that is screened by the foreground and therefore appears in only one viewpoint image, in which a corresponding point is not present.

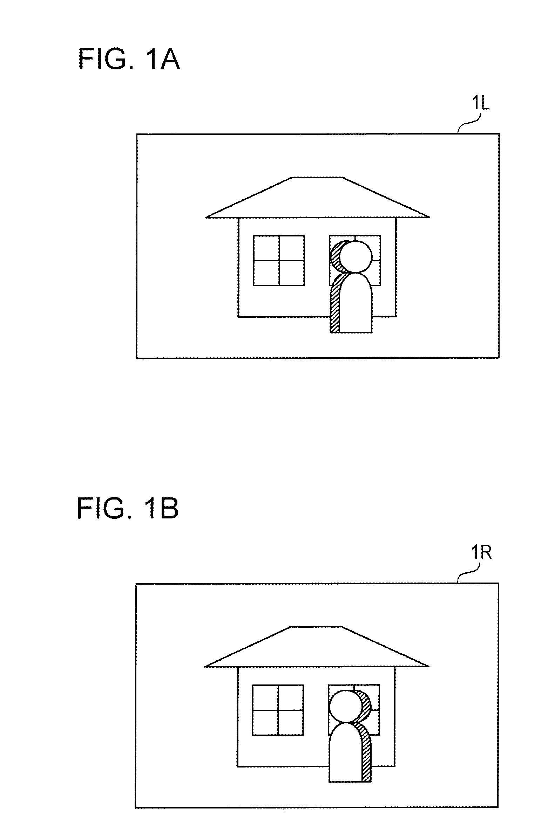

An example in which an occlusion region is generated is described with reference to Figs. 1A and 1B. Figs. 1A and 1B are images in which a person is present in front of a house. Fig. 1A is a left-eye image 1L while Fig. 1B is a right-eye image 1R. A shaded part in the left-eye image 1L that is positioned to the left of the person is a part that is present in the left-eye image 1L but does not appear in the right-eye image 1R. Similarly, a shaded part in the right-eye image 1R that is positioned to the right of the person is a part that is present in the right-eye image 1R but does not appear in the left-eye image 1L. These shaded parts are occlusion regions that are generated as a result of screening caused by the person, which is the foreground. A region in which the person appears has a large disparity while a part in which the house appears has a smaller disparity. As seen from Figs. 1A and 1B, an occlusion region is generated when regions that have different disparities lie adjacent to each other.

Citation List

Patent Literature

PTL 1: Japanese Unexamined Patent Application Publication No. 2003-085566

Non Patent Literature

NPL 1: S. Birchfield and C. Tomasi, Depth Discontinuities by Pixel-to-Pixel Stereo, International Journal of Computer Vision, 35(3): 269-293, December 1999.

Summary of Invention

Technical Problem

However, existing disparity estimation methods including techniques described in PTL 1 and NPL 1 assume that corresponding points in viewpoint images are not displaced from each other in the vertical direction and therefore have a problem in that a disparity cannot be correctly estimated for an image in which a displacement in the vertical direction occurs.

Actually, a displacement in the vertical direction occurs in an image captured by using a crossover method, for example. In a crossover method, optical axes are not parallel to each other and therefore the slope of an epipolar line differs between a left-eye image and a right-eye image, which causes a displacement in the vertical direction, the degree of displacement differing from region to region. That is, a disparity has a horizontal component and a vertical component. Furthermore, in the case where regions having different disparity vertical components lie adjacent to each other, an occlusion region is generated due to screening in the vertical direction.

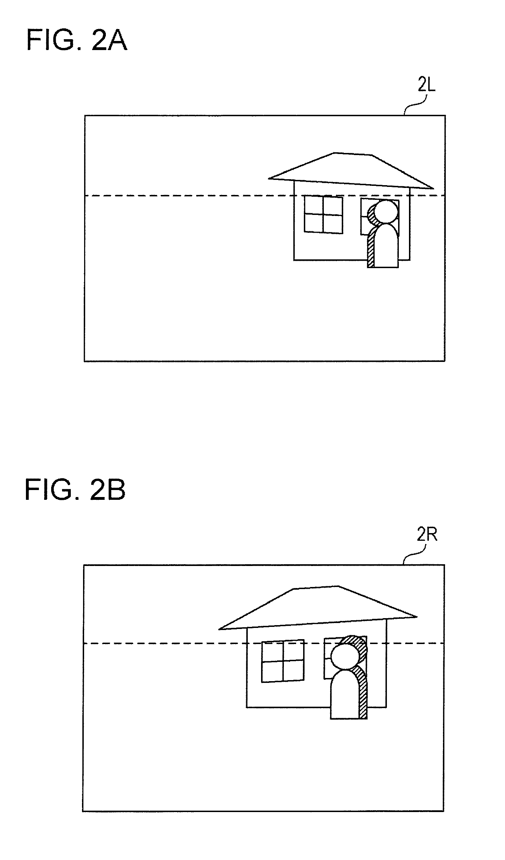

A specific example of the foregoing event is described. Figs. 2A and 2B illustrate an example of images in which a displacement occurs in the vertical direction, which is caused by image capturing using a crossover method. Fig. 2A is a left-eye image 2L while Fig. 2B is a right-eye image 2R. Note that a dotted line in Figs. 2A and 2B is drawn in order to indicate the position of the same line in the left-eye image 2L and the right-eye image 2R. In the right-eye image 2R, a house is positioned upward relative to a house in the left-eye image 2L and therefore occurrence of a displacement in the vertical direction is seen. The position of a person is also displaced in the vertical direction, however, the amount of displacement of the person is smaller than that of the house. Similarly, as in the example illustrated by Figs. 1A and 1B, shaded parts are occlusion regions that are generated as a result of screening caused by the person, which is the foreground.

The amount of displacement in the vertical direction differs between the person and the house and therefore an occlusion region is present also in a part above the head of the person in the right-eye image 2R. That is, this part is an occlusion caused by screening in the vertical direction. In the example illustrated by Figs. 1A and 1B, screening occurs in the horizontal direction only, however, in the example illustrated by Figs. 2A and 2B, screening occurs in both the horizontal and vertical directions. An occlusion caused by screening in the vertical direction is hereinafter called a vertical occlusion while a usual occlusion caused by screening in the horizontal direction is hereinafter called a horizontal occlusion. The foregoing existing disparity estimation methods do not take into consideration such a vertical occlusion region, which may be a cause of an error in disparity estimation.

A displacement in the vertical direction or a vertical occlusion may also occur in the case where the magnification of a lens differs between a left-eye image and a right-eye image. It may also occur in the case where the image capturing position vertically differs between a left-eye image and a right-eye image or in the case where the image capturing direction vertically differs between a left-eye image and a right-eye image. In the case where a disparity between viewpoint images captured by cameras that are arranged vertically is estimated, a displacement in the horizontal direction or a horizontal occlusion occurs, which has also been a problem. More generally, in the case where a disparity between viewpoint images captured by cameras that are arranged diagonally is estimated, a similar problem has arisen.

The present invention has been designed in view of the foregoing facts and an object thereof is to provide a stereoscopic image processing apparatus, a stereoscopic image processing method, and a program with which a disparity can be correctly estimated even for an image in which a disparity has a vertical component.

Solution to Problem

In order to solve the foregoing problems, according to first technical means of the present invention, there is provided a stereoscopic image processing apparatus that estimates, from a plurality of viewpoint images, a horizontal component and a vertical component of a disparity between viewpoint images, including an evaluation value calculation unit that calculates an evaluation value relating to pixel similarity between the viewpoint images and disparity continuity between the viewpoint images, and a disparity map creation unit that selects a combination of disparities of each pixel, for which the evaluation value is a minimum evaluation value, as a disparity of the pixel and creates a disparity map having a horizontal component and a vertical component. In the stereoscopic image processing apparatus, the disparity continuity is continuity between a disparity of a pixel of interest and a disparity of a pixel horizontally adjacent to the pixel of interest and/or a disparity of a pixel vertically adjacent to the pixel of interest, and the evaluation value that is calculated by the evaluation value calculation unit becomes smaller as the pixel similarity increases and becomes smaller as the disparity continuity increases.

According to second technical means, in the first technical means, the pixel similarity is similarity between a pixel in a region surrounding a predetermined region including a pixel of interest in one viewpoint image and a pixel in a region surrounding a predetermined region including a pixel, in the other viewpoint image, corresponding to the pixel of interest.

According to third technical means, in the first or second technical means, the pixel similarity is calculated by using at least a pixel luminance value.

According to fourth technical means, in any one of the first to third technical means, the disparity continuity is calculated for a horizontal component and/or a vertical component of a disparity.

According to fifth technical means, in any one of the first to fourth technical means, the disparity map creation unit includes an occlusion region detection unit that detects an occlusion region on the basis of the evaluation value.

According to sixth technical means, in the fifth technical means, the occlusion region detection unit detects both of a horizontal occlusion region and a vertical occlusion region on the basis of the evaluation value.

According to seventh technical means, in the fifth or sixth technical means, the occlusion region detection unit detects at least a horizontal occlusion region on the basis of the evaluation value, and the evaluation value calculation unit calculates the evaluation value under a condition that a magnitude of a difference in a disparity horizontal component between a pixel adjacent to a right side of the horizontal occlusion region and a pixel adjacent to a left side of the horizontal occlusion region is equal to a horizontal width of the horizontal occlusion region.

According to eighth technical means, in the fifth or sixth technical means, the occlusion region detection unit detects at least a vertical occlusion region on the basis of the evaluation value, and the evaluation value calculation unit calculates the evaluation value under a condition that a magnitude of a difference in a disparity vertical component between a pixel adjacent to an upper side of the vertical occlusion region and a pixel adjacent to a lower side of the vertical occlusion region is equal to a vertical width of the vertical occlusion region.

According to ninth technical means, in any one of the first to eighth technical means, the evaluation value calculation unit varies a search range relating to a vertical component of a disparity between the viewpoint images in accordance with coordinates of a pixel of interest.

According to tenth technical means, in any one of the first to eighth technical means, the evaluation value calculation unit varies a search range relating to a horizontal component of a disparity between the viewpoint images in accordance with coordinates of a pixel of interest.

According to eleventh technical means, there is provided a stereoscopic image processing method that estimates, from a plurality of viewpoint images, a horizontal component and a vertical component of a disparity between viewpoint images, including a step of calculating an evaluation value relating to pixel similarity between the viewpoint images and disparity continuity between the viewpoint images, and a step of selecting a combination of disparities of each pixel, for which the evaluation value is a minimum evaluation value, as a disparity of the pixel and creating a disparity map having a horizontal component and a vertical component. In the stereoscopic image processing method, the disparity continuity is continuity between a disparity of a pixel of interest and a disparity of a pixel horizontally adjacent to the pixel of interest and/or a disparity of a pixel vertically adjacent to the pixel of interest, and the evaluation value that is calculated in the step of calculating an evaluation value becomes smaller as the pixel similarity increases and becomes smaller as the disparity continuity increases.

According to twelfth technical means, there is provided a program for causing a computer to execute stereoscopic image processing that estimates, from a plurality of viewpoint images, a horizontal component and a vertical component of a disparity between viewpoint images, the stereoscopic image processing including a step of calculating an evaluation value relating to pixel similarity between the viewpoint images and disparity continuity between the viewpoint images, and a step of selecting a combination of disparities of each pixel, for which the evaluation value is a minimum evaluation value, as a disparity of the pixel and creating a disparity map having a horizontal component and a vertical component. In the stereoscopic image processing, the disparity continuity is continuity between a disparity of a pixel of interest and a disparity of a pixel horizontally adjacent to the pixel of interest and/or a disparity of a pixel vertically adjacent to the pixel of interest, and the evaluation value that is calculated in the step of calculating an evaluation value becomes smaller as the pixel similarity increases and becomes smaller as the disparity continuity increases. Advantageous Effects of Invention

According to the present invention, disparity estimation can be performed with fewer errors even for an image in which a disparity has a vertical component.

Brief Description of Drawings

[Fig. 1A] Fig. 1A is a diagram for describing the position of an occlusion region and illustrates an example of a left-eye image.
[Fig. 1B] Fig. 1B is a diagram for describing the position of an occlusion region and illustrates an example of a right-eye image.
[Fig. 2A] Fig. 2A is a diagram for describing the position of an occlusion region and illustrates another example of a left-eye image.
[Fig. 2B] Fig. 2B is a diagram for describing the position of an occlusion region and illustrates another example of a right-eye image.
[Fig. 3] Fig. 3 is a block diagram illustrating an example of a schematic configuration of a stereoscopic image processing apparatus according to a first embodiment of the present invention.
[Fig. 4] Fig. 4 is a diagram for describing a way of obtaining an evaluation value according to the first embodiment of the present invention.

[Fig. 5] Fig. 5 is a flowchart for describing a flow of processing performed in the stereoscopic image processing apparatus according to the first embodiment of the present invention.

[Fig. 6] Fig. 6 is a block diagram illustrating an example of a schematic configuration of the stereoscopic image processing apparatus according to a third embodiment of the present invention.

[Fig. 7] Fig. 7 is a flowchart for describing a flow of processing performed in the stereoscopic image processing apparatus according to the third embodiment of the present invention.

Description of Embodiments

The details of embodiments of the present invention are described below in detail with reference to the accompanying drawings. In the drawings, components having the same function are denoted by the same reference numeral and redundant descriptions thereof are omitted.

<First Embodiment>

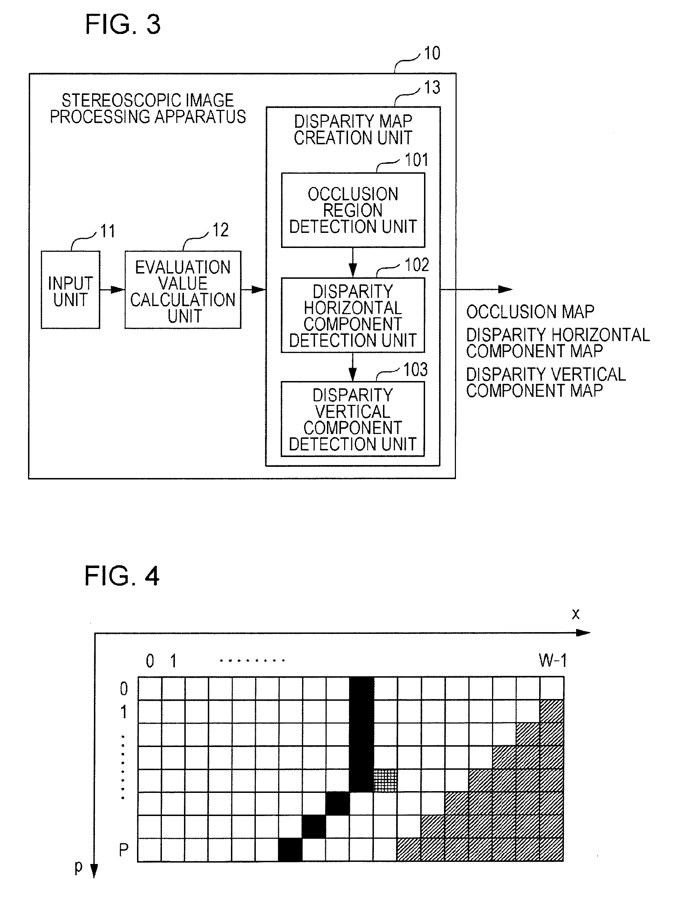

Fig. 3 is a block diagram illustrating an example of a schematic configuration of a stereoscopic image processing apparatus according to a first embodiment of the present invention. Fig. 4 is a diagram for describing a way of obtaining an evaluation value according to the first embodiment of the present invention.

As illustrated in Fig. 3, a stereoscopic image processing apparatus 10 of this embodiment includes an input unit 11 that receives a plurality of viewpoint images, an evaluation value calculation unit 12 that calculates, for a plurality of viewpoint images that have been received, an evaluation value relating to pixel similarity between viewpoint images and disparity continuity between viewpoint pixels, and a disparity map creation unit 13 that creates a disparity map having a horizontal component and a vertical component by using an evaluation value that has been calculated. The disparity map creation unit 13 creates a disparity map by selecting a combination of disparities of each pixel, for which the evaluation value that has been calculated is a minimum evaluation value, as a disparity of the pixel. As a matter of course, a configuration may be adopted in which the stereoscopic image processing apparatus 10 includes, instead of the input unit 11, a storage unit that stores a plurality of viewpoint images and the evaluation value calculation unit 12 reads the plurality of viewpoint images therefrom.

The evaluation value calculation unit 12 of the present invention uses continuity between the disparity of a pixel of interest and the disparity of a pixel horizontally adjacent to the pixel of interest and the disparity of a pixel vertically adjacent to the pixel of interest as disparity continuity. An evaluation value calculated by the evaluation value calculation unit 12 of the present invention becomes smaller as pixel similarity increases and becomes smaller as disparity continuity increases.

For easier understanding, an example is first given and described below in which the evaluation value calculation unit 12 calculates continuity between the disparity of a pixel of interest and the disparity of a pixel horizontally adjacent to the pixel of interest and calculates an evaluation value by using the resulting continuity and pixel similarity that has been calculated. Calculation of continuity with the disparity of a pixel vertically adjacent to the pixel of interest and calculation of an evaluation value by using the resulting continuity and pixel similarity that has been calculated are described later.

The stereoscopic image processing apparatus 10 of this embodiment performs disparity estimation on lines one by one independently for viewpoint images received by the input unit 11. This disparity estimation is performed by the evaluation value calculation unit 12 and the disparity map creation unit 13 and processing on lines is performed by using dynamic programming. That is, the evaluation value calculation unit 12 and the disparity map creation unit 13 detect a horizontal component and a vertical component of a disparity by using dynamic programming. The evaluation value calculation unit 12 handles a combination of disparity values of each pixel in a line as a path and calculates an evaluation value for each combination. Note that, in dynamic programming, evaluation values of all combinations are not obtained but a combination having a possibility of an evaluation value for the combination being a minimum evaluation value is selected and a path is searched, which reduces the amount of calculation.

The disparity map creation unit 13 includes an occlusion region detection unit 101, a disparity horizontal component detection unit 102, and a disparity vertical component detection unit 103, selects a combination of disparity values, for which the evaluation value calculated by the evaluation value calculation unit 12 is a minimum evaluation value, and creates and outputs an occlusion map, a disparity horizontal component map, and a disparity vertical component map. An occlusion map, a disparity horizontal component map, and a disparity vertical component map are collectively called a disparity map. Here, an example is given as a preferred example, in which the disparity map creation unit 13 includes the occlusion region detection unit 101, that is, the disparity map creation unit 13 detects an occlusion region. The disparity map creation unit 13 may be configured so as to at least detect a horizontal component and a vertical component of a disparity to create a disparity map formed of a disparity horizontal component map and a disparity vertical component map (that is, a disparity map having a horizontal component and a vertical component).

In the configuration described above, the stereoscopic image processing apparatus 10 first converts a viewpoint image received by the input unit 11 into a luminance image in advance. Here, an example is given in which a plurality of viewpoint images received by the input unit 11 are each constituted by two images in total, that is, a left-eye image and a right-eye image. For example, the input unit 11 receives a left-eye image and a right-eye image, converts the images into luminance images, and outputs the resulting images to the evaluation value calculation unit 12. As a matter of course, the input unit 11 may receive a left-eye image and a right-eye image that have been converted in advance into luminance images. A case of estimating a disparity map of a right-eye image using a left-eye image as a reference is described below. Here, it is assumed that processing is performed by using a luminance image (that is, a luminance value of an image) which is optimal for obtaining a disparity. However, processing is not limited to the one using a luminance value. Processing may be performed also by using the pixel values of a left-eye image and a right-eye image, such as the value of any one of RGB or the values of a plurality of colors among RGB in the case of RGB data, for example.

The evaluation value calculation unit 12 calculates a similarity M(x, y, p, q) of the luminance value of a right-eye image relative to the luminance value of a left-eye image for ranges of $0 \le x \le w-1$, $0 \le p \le P$, and $-Q \le q \le Q$ by using equation (1) below.

[Math. 1]

$$M(x, y, p, q) = \frac{1}{(2a+1)^2} \sum_{j=-a}^{a} \sum_{i=-a}^{a} \left| R(x+i, y+j) - L(x+p+i, y+q+j) \right| \qquad \cdots (1)$$

Here, L and R respectively denote the luminance values of a left-eye image and a right-eye image, (x, y) denotes coordinates in an image, and y denotes a line of interest on which estimation is being performed. p and q respectively represent a horizontal component and a vertical component of a disparity. P and Q respectively represent a search range of a horizontal component of a disparity and a search range of a vertical component of a disparity. p and q respectively have values in the ranges of $0 \le p \le P$ and $-Q \le q \le Q$ only. w is the number of horizontal pixels of an image and 2a+1 is a block size defined while assuming $-a \le i \le a$ and $-a \le j \le a$. The value of a may be determined as desired and search ranges do not necessarily form a rectangular shape. Note that, in the case where coordinates indicate a position outside an image when equation (1) is calculated, image edge processing may be performed in which the coordinates are replaced with the coordinates of a neighboring image edge, for example.

The similarity M(x, y, p, q) in equation (1) is a value defined by using the sum of absolute values of differences, each of the differences being a difference between the luminance value of a right-eye image and the luminance value of a left-eye image (a difference between the luminance value of a left-eye image at a position shifted by (p, q) and the luminance value of a pixel (x, y) in a right-eye image). Similarity of pixels that are compared increases as the similarity M(x, y, p, q) becomes smaller. However, the definition of similarity is not limited to the example described above and similarity may be defined by using other functions that express similarity, such as the sum of difference squares or normalized cross correlation.

As this embodiment is described while giving the example in which search ranges are determined by P and Q, it is desirable that the evaluation value calculation unit 12 calculate an evaluation value for a region surrounding a predetermined region of a pixel of interest (a region having the block size described above) by using similarity of luminance values between viewpoint images. That is, it is preferable that, as similarity, similarity between a pixel in a region surrounding a predetermined region including a pixel of interest in one viewpoint image and a pixel in a region surrounding a predetermined region including a pixel, in the other viewpoint image, corresponding to the pixel of interest be used. Note that, an evaluation value may be calculated by obtaining similarity for the entire region of an image without specifically determining search ranges.

Next, an evaluation value U(x, p) is calculated for every (x, p) that satisfies $0 \le x \le w-1$ and $0 \le p \le P$ in accordance with equation (2) below. An evaluation value U(x, p) is a value calculated on the basis of the minimum value of the similarity M(x, y, p, q) described above. This is because the pixel values of pixels that are compared become more similar as the value of the similarity M(x, y, p, q) decreases. In the procedure of calculation, equation (2) is used and calculation is performed for x = 0 first and then calculation is performed for x = 1 to x = w-1 in order. Equation (2) is recursive and therefore the result is accumulated in order starting with x = 0 and U(w-1, p) that is obtained lastly is an evaluation value for a combination of disparity values in a line of interest. Because of $0 \le p \le P$, P+1 pieces of U(w-1, p) are obtained, which represent evaluation values of P+1 patterns of paths.

[Math. 2]

$$U(x,p) = \begin{cases} \min_{-Q \leq q \leq Q}[M(x,y,p,q)], & (x = 0) \\ \min_{-Q \leq q \leq Q}[M(x,y,p,q)] + \min_{(xb,pb) \in Ax}[U(xb,pb) + Dpx(p,pb)] - c_0, & (x \neq 0) \end{cases} \quad \cdots (2)$$

Here, Dpx is a function expressed by the following equation and c0 and c1 are constants.

$$Dpx(p_1, p_2) = \begin{cases} 0, & p_1 = p_2 \\ c_1, & otherwise \end{cases} \quad \cdots (3)$$

Ax is a set of (x, p) that satisfies the following equation.

$$Ax = \begin{cases} (x-1,p),(x-1,p-1),\cdots,(x-1,0), \\ (x-2,p+1),(x-3,p+2),\cdots,(x-P-1+p,P) \end{cases} \quad \cdots (4)$$

Ax in equation (4) represents, under the assumption that a disparity horizontal component of a pixel of interest (the x-coordinate thereof is x) in a right-eye image is p, candidates of a disparity horizontal component lying immediately to the left of the component. A pixel of interest (x) in a right-eye image corresponds to a pixel (x+p) in a left-eye image. Elements of Ax are divided into three groups and described.

[I] Element (x-1, p)

This element represents a case where a disparity horizontal component of a pixel (x-1) lying immediately to the left of a pixel of interest is equal to that of the pixel of interest. A pixel (x-1) in a right-eye image corresponds to a pixel (x+p-1) in a left-eye image.

[II] Elements (x-1, p-1), ..., (x-1, 0)

These elements represent a case where a disparity horizontal component of a pixel lying immediately to the left of a pixel of interest is smaller than that of the pixel of interest. For example, an element (x-1, p-2) expresses a pixel (x-1) in a right-eye image corresponding to a pixel (x+p-3) in a left-eye image. In this case, two pixels (x+p-1) and (x+p-2) in the left-eye image do not have corresponding points in the right-eye image, which is a case where a horizontal occlusion region is present in the left-eye image.

[III] Elements (x-2, p+1), ..., (x-P-1+p, P)

These elements represent a case where a pixel lying immediately to the left of a pixel of interest corresponds to a horizontal occlusion region. In this case, a pixel in a right-eye image is selected that corresponds to a pixel (x+p-1) lying immediately to the left of a pixel (x+p) in a left-eye image that corresponds to a pixel of interest. For example, an element (x-3, p+2) expresses a pixel (x-3) in a right-eye image corresponding to a pixel (x+p-1) in a left-eye image. In this case, two pixels (x-1) and (x-2) in the right-eye image do not have corresponding points in the left-eye image and therefore correspond to a horizontal occlusion region. A difference in a disparity horizontal component between the pixel (x-3) and a pixel of interest in the right-eye image is two, which is equal to the width of the horizontal occlusion region. That is, constraints are applied so that the horizontal width of a horizontal occlusion region is equal to a difference in a disparity horizontal component between pixels respectively lying on the right side and on the left side of the horizontal occlusion region.

Fig. 4 illustrates a region of the set Ax expressed by equation (4) where the horizontal axis represents the x-coordinate while the vertical axis represents a disparity horizontal component. Coordinates having a lattice pattern represent a pixel of interest (x) and a disparity horizontal component of the pixel of interest is p. In this case, P+1 sets of coordinates drawn in black correspond to the elements of Ax. In Fig. 4, coordinates having a shaded pattern represent a region outside a disparity search range that lies at the edge of an image and are expressed by a set B in the equation below. When equation (2) is calculated, the value of U(x, p) is replaced by a large value that is considered to be infinite for this region.

[Math. 3]

$$B = \left\{ (x, p) \mid x + p \geq w \right\} \qquad \cdots (5)$$

When equation (2) is calculated, the value of q obtained by giving a minimum value using min(q), that is, the value of q when M(x, y, p, q) is at a minimum, is retained as Kq(x, p). Similarly, the values of xb and pb obtained by giving minimum values using min(xb, pb), that is, the values of xb and pb when U(xb, pb)+Dpx(p, pb) is at a minimum are retained as Kx(x, p) and Kp(x, p) respectively. Kx and Kp represent a path relating to an evaluation value U. xp and pb are respectively a coordinate value in the horizontal direction and the value of a horizontal component of a disparity, in the set Ax of a right-eye image. The technical meanings of equations (2) to (4) are described later.

The disparity map creation unit 13 creates a disparity map relating to each pixel in a line of interest by using an evaluation value U(w-1, p) that has been calculated and Kx(x, p), Kp(x, p) and Kq(x, p). The disparity map creation unit 13 first selects a minimum evaluation value from among P+1 evaluations values U(w-1, p) obtained by the evaluation value calculation unit 12 on the basis of dynamic programming. In this example, the value of U(x, p) is set to be infinite in the region expressed by equation (5) and therefore U(w-1, 0) is the minimum value naturally. A path for this evaluation value is traced from a rightmost pixel (x = w-1) toward the left in order by referring to Kx and Kp and a disparity horizontal component and a disparity vertical component of each pixel are detected. Simultaneously, an occlusion region is detected from disparity horizontal components of the pixels.

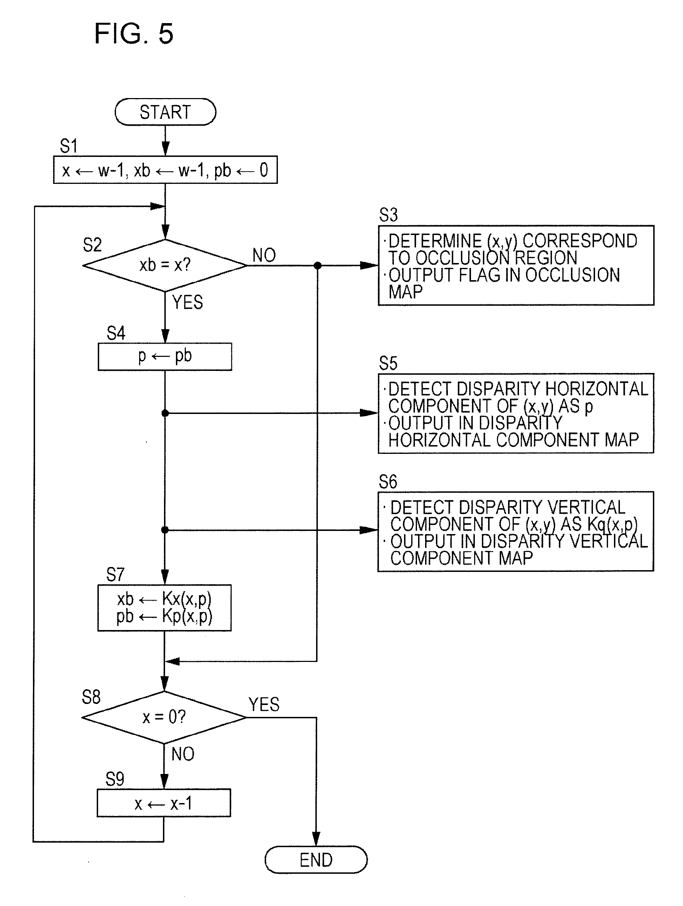

An example of a flow of processing performed by the disparity map creation unit 13 is described with reference to Fig. 5. The example illustrates a case where U(w-1, 0) is the minimum value. First, in step S1, the values of variables x, xb, and pb are initialized. x is a coordinate value in the horizontal direction of a right-eye image, in a line of interest. In this example of processing, w-1 is set in x as an initial value in order to perform processing in order from the rightmost pixel on the line of interest. xb is a coordinate value in the horizontal direction in the set Ax of a right-eye image and w-1 is set in xb as an initial value for a reason similar to that for x. pb is the value of a horizontal component of a disparity in the set Ax of a right-eye image and 0 is set in pb as an initial value.

Next, in step S2, the values of xb and x are compared. If the values are not equal, that is, if the evaluation value calculation unit 12 has selected an element [III] from Ax, the flow proceeds to step S3. In step S3, it is determined that coordinates (x, y) correspond to a horizontal occlusion region and a flag indicating that the coordinates fall under an occlusion region is outputted in an occlusion map. Then, the flow proceeds to step S8.

In step S2, if the values are equal, that is, if the evaluation value calculation unit 12 has selected an element [I] or [II] from Ax, the flow proceeds to step S4 and the value of pb is set in p. Subsequently, in step S5, the value of a disparity horizontal component of the coordinates (x, y) is detected as p and outputted in a disparity horizontal component map. In step S6, the value of a disparity vertical component of the coordinates (x, y) is detected as Kq(x, p) and outputted in a disparity vertical component map. After the processing in steps S5 and S6, in step S7, the values of xb and pb are updated with Kx(x, p) and Kp(x, p) respectively.

After the processing in step S3 and after the processing in step S7, it is determined whether or not x = 0 in step S8. If x = 0, the processing in Fig. 5 ends because processing has been performed up to the leftmost pixel. Otherwise, in step S9, processing of moving to an immediate left pixel is performed and the flow returns to step S2.

In the processing described above, steps S2 and S3 are processing of determining an occlusion region and this processing is performed by the occlusion region detection unit 101. Steps S4 and S5 are processing of detecting a disparity horizontal component and this processing is performed by the disparity horizontal component detection unit 102. Step S6 is processing of detecting a disparity vertical component and this processing is performed by the disparity vertical component detection unit 103.

In this way, disparities of all pixels in a line of interest (disparities relating to all values of x) are estimated and an occlusion region in the line is simultaneously detected. The evaluation value calculation unit 12 and the disparity map creation unit 13 perform processing on all lines and, as a result, a disparity of the entire image is estimated and a disparity map is created.

Next, the technical meanings of the foregoing equations (2) to (4) are described.

The term min(q) in equation (2) has an effect of searching for a vertical component of a disparity. For each disparity horizontal component p, addition to an evaluation value is performed by using a minimum similarity that is obtained when the value of a disparity vertical component q is varied within a search range. To the term min(xb, pb) in equation (2), a dynamic programming technique is applied in which evaluation values are accumulated using a minimum evaluation value of an immediate left pixel.

Note that, as in NPL 1, evaluation values are accumulated excluding a similarity of an occlusion region, by using the range of Ax defined by equation (4). The set Ax expressed by equation (4) is provided for constraining the magnitude of a difference in a disparity horizontal component between a pixel adjacent to the left end of an occlusion region and a pixel adjacent to the right end of the occlusion region to be equal to the horizontal width of the occlusion region. That is, the evaluation value calculation unit 12 calculates an evaluation value under the condition that the magnitude of a difference in a disparity horizontal component between a pixel adjacent to the right side of a horizontal occlusion region and a pixel adjacent to the left side of the horizontal occlusion region is equal to the horizontal width of the horizontal occlusion region. Therefore, the occlusion region detection unit 101 detects an occlusion region in the horizontal direction. Using the set Ax having such a range has an effect of reducing errors in occlusion region detection and disparity estimation. The constant term $c_0$ in equation (2) gives a reward to an evaluation value in accordance with the number of corresponding points and therefore has an effect of preventing detection of an erroneously wide occlusion region.

Dpx in equation (3) is a value that represents continuity of disparity horizontal components and gives a penalty (constant term $c_1$) in the case where disparity horizontal components are discontinuous, thereby reducing occurrences of detection of such a disparity, which has an effect of smoothing. The effect of smoothing may be given not only by this equation but also by other functions, such as a linear function using a difference between two disparities. As a matter of course, in the case where the effect of smoothing is not taken into consideration, Dpx in equation (2) may be always 0, that is, an equation from which the term Dpx is excluded may be used.

As described above, the evaluation value U(w-1, p) in equation (2) is calculated on the basis of the total of added values each obtained by adding together a minimum value among similarities, obtained in a vertical component search range, of all pixels except pixels estimated to correspond to an occlusion region and the value that represents continuity of disparity horizontal components in the horizontal direction.

As described above, the evaluation value calculation unit 12 calculates an evaluation value by using pixel similarity between viewpoint images and continuity of disparities in the horizontal direction (that is, continuity between a disparity of a pixel of interest and a disparity of a pixel horizontally adjacent to the pixel of interest) between viewpoint images. Therefore, a calculated evaluation value is a value relating to the similarity and continuity. It is found that an evaluation value calculated by the evaluation value calculation unit 12 becomes smaller as pixel similarity between viewpoint pixels increases (as the M(x, y, p, q) described above decreases) and becomes smaller as continuity of disparities in the horizontal direction increases (as the Dpx described above decreases).

In this embodiment, the case is described above, in which the range of a horizontal component of a disparity is set to be $0 \leq p \leq P$ so that p has positive values only. A similar technique is applicable to the case where p may have a negative value. Furthermore, the case of obtaining a disparity map of a right-eye image is described above. A disparity map of a left-eye image relative to a right-eye image may also be obtained in a similar manner.

As described above, with the stereoscopic image processing apparatus of this embodiment, disparity estimation can be performed with fewer errors even for an image in which a disparity has a vertical component, by estimating both of a horizontal component and a vertical component of a disparity on the basis of pixel similarity between viewpoint images and detecting an occlusion region simultaneously when disparity estimation is performed. This effect can also be obtained by using only continuity between a disparity of a pixel of interest and a disparity of a pixel horizontally adjacent to the pixel of interest as disparity continuity. Note that, in this embodiment, the description is given under the assumption that the disparity map creation unit 13 performs processing of detecting an occlusion region and detecting a horizontal component and a vertical component of a disparity. Even in the case where the disparity map creation unit 13 does not perform processing of detecting an occlusion region, components of a disparity in both directions are estimated and therefore a disparity can be estimated with fewer errors even for an image in which a disparity has a vertical component.

Next, as a major characteristic of the first embodiment, a method is described while referring to the foregoing example in which continuity in the horizontal direction is used, the method being a method in which continuity between a disparity of a pixel of interest and a disparity of a pixel horizontally adjacent to the pixel of interest and a disparity of a pixel vertically adjacent to the pixel of interest is calculated, and an evaluation value is calculated by using the resulting continuity and pixel similarity that has been calculated. Here, a calculated evaluation value becomes smaller as pixel similarity increases and becomes smaller as continuity of disparities in the horizontal direction and continuity of disparities in the vertical direction increase.

The first embodiment is a modification of the foregoing example in which only continuity in the horizontal direction is used so that the effect of smoothing is given in both the horizontal and vertical directions of a disparity. Therefore, an example of the schematic configuration of the stereoscopic image processing apparatus in this embodiment is illustrated as the stereoscopic image processing apparatus 10 in Fig. 1 as described above. However, the way of processing performed by the evaluation value calculation unit 12 is different from that performed in the foregoing example in which only continuity in the horizontal direction is used.

The difference is described below. In the foregoing example in which only continuity in the horizontal direction is used, the evaluation value calculation unit 12 obtains continuity, in the horizontal direction, relating to a horizontal component of a disparity of a pixel of interest and uses the obtained continuity to calculate an evaluation value. On the other hand, the evaluation value calculation unit 12 in the first embodiment obtains continuity, in the horizontal direction and in the vertical direction, relating to a horizontal component and a vertical component of a disparity of a pixel of interest respectively and uses the obtained continuity to calculate an evaluation value.

More specifically, in the first embodiment, disparity estimation is performed on lines one by one in order from the uppermost line by using the value of a disparity obtained from the preceding line. A horizontal component and a vertical component of a disparity obtained from the preceding line are respectively denoted by Fp(x) and Fq(x) and a description is given. The evaluation value calculation unit 12 first calculates a similarity M(x, y, p, q) as in the foregoing example in which only continuity in the horizontal direction is used.

Next, the evaluation value calculation unit 12 calculates an evaluation value U(x, p) for every (x, p) that satisfies $0 \leq x \leq w\text{-}1$ and $0 \leq p \leq P$ in accordance with equation (6) below. In the procedure of calculation, equation (6) is used and calculation is performed for x = 0 first and then calculation is performed for x = 1 to x = w-1 in order.

[Math. 4]

$$U(x,p) = \begin{cases} \min_{-Q \leq q \leq Q}[M(x,y,p,q) + Dqy(q, Fq(x))] + Dpy(p, Fp(x)) \,, & (x = 0) \\[2mm] \min_{-Q \leq q \leq Q}[M(x,y,p,q) + Dqy(q, Fq(x))] \\ \quad + \min_{(xb,pb) \in Ax}[U(xb,pb) + Dpx(p,pb) + Dqx(Kq(x,p), Kq(xb,pb))] \\ \quad + Dpy(p, Fp(x)) - c_0 \,, & (x \neq 0) \end{cases} \quad \cdots (6)$$

Here, Dqx, Dpy, and Dqy are functions respectively expressed by the equations below and $c_2$, $c_3$, $c_4$, $c_5$, and $c_6$ are constants. occ is a constant indicating that a pixel in question corresponds to an occlusion region. Dpx and Ax respectively expressed by equations (3) and (4) are used as they are and the remaining processing is performed similarly as in the foregoing case in which only continuity in the horizontal direction is used. When equation (6) is calculated, the value of q obtained by giving a minimum value using min(q) is retained as Kq(x, p). Similarly, the values of xb and pb obtained by giving minimum values using min(xb, pb) are retained as Kx(x, p) and Kp(x, p) respectively. The technical meanings of equations (6) to (9) are described later.

[Math. 5]

$$Dqx(q_1, q_2) = \begin{cases} 0, & q_1 = q_2 \\ c_2, & \text{otherwise} \end{cases} \quad \cdots (7)$$

$$Dpy(p_1, p_2) = \begin{cases} 0, & p_1 = p_2 \\ c_3, & p_2 = occ \\ c_4, & \text{otherwise} \end{cases} \quad \cdots (8)$$

$$Dqy(q_1, q_2) = \begin{cases} 0, & q_1 = q_2 \\ c_5, & q_2 = occ \\ c_6, & \text{otherwise} \end{cases} \quad \cdots (9)$$

Note that, in the case where a line of interest is the uppermost line of an image, Fp(x) and Fq(x) have no value and therefore equation (10) below is used instead of equation (6).

[Math. 6]

$$U(x,p) = \begin{cases} \min_{-Q \leq q \leq Q}[M(x,y,p,q)], & (x=0) \\ \min_{-Q \leq q \leq Q}[M(x,y,p,q)] \\ \quad + \min_{(xb,pb) \in Ax}[U(xb,pb) + Dpx(p,pb) + Dqx(Kq(x,p),Kq(xb,pb))] \\ \quad - c_0, & (x \neq 0) \end{cases} \quad \cdots (10)$$

The disparity map creation unit 13 performs similar processing as in the foregoing example in which only continuity in the horizontal direction is used. At the time when disparity estimation on all pixels in a line of interest has been completed, horizontal components and vertical components of all disparities in the line are retained as Fp(x) and Fq(x) respectively. Note that, for a pixel that is determined to correspond to an occlusion region, occ is substituted for both of Fp(x) and Fq(x). Then, processing is performed on the next line. By performing the foregoing processing on all lines, a disparity of the entire image is estimated and a disparity map is created.

In this embodiment, the example is given in which processing is performed on lines in order from the uppermost line. However, processing is not limited to this and may be performed on lines in order from the lowermost line to upper lines, for example. As another example, processing may be performed such that estimation is performed on a central line first, then processing is performed from the center to upper lines up to the uppermost line in order, and processing is thereafter performed from the center to lower lines down to the lowermost line in order. That is, estimation processing is performed from a line in which an error occurs to a small degree by taking into consideration a case where an error in a line preceding a line of interest may be propagated to the line of interest because such estimation processing has an effect of reducing errors occurring over the entire image.

Here, the technical meanings of the foregoing equations (6) to (9) are described.

Dqx in equation (7) is a value representing continuity, in the horizontal direction, of disparity vertical components and Dpy in equation (8) and Dqy in equation (9) are values representing continuity, in the vertical direction, of disparity horizontal components and disparity vertical components respectively. When Dqx, Dpy, or Dqy is discontinuous, a penalty is given thereto. This can provide an effect of two-dimensional smoothing and reduce errors in disparity estimation particularly on a region in an image not having a distinct pattern or on a region having a repetitive pattern or the like, in which a disparity cannot be uniquely determined only with local similarity.

The evaluation value U(w-1, p) in equation (6) is a value calculated on the basis of the foregoing values representing continuity and the similarity M(x, y, p, q) in equation (1). More specifically, the evaluation value U(w-1, p) expressed by equation (6) is calculated on the basis of the total of added values each obtained by adding together a minimum value among similarities, obtained in a vertical component search range, of all pixels except pixels estimated to correspond to an occlusion region and the values that represent continuity of disparity horizontal components and continuity of disparity vertical components in the horizontal direction and in the vertical direction.

As described above, the evaluation value calculation unit 12 calculates an evaluation value by using pixel similarity between viewpoint images and continuity of disparities in the horizontal direction and in the vertical direction between viewpoint images (that is, continuity between a disparity of a pixel of interest and a disparity of a pixel horizontally adjacent to the pixel of interest and a disparity of a pixel vertically adjacent to the pixel of interest). Therefore, a calculated evaluation value is a value relating to the similarity and continuity. It is found that an evaluation value calculated by the evaluation value calculation unit 12 becomes smaller as pixel similarity between viewpoint pixels increases (as the M(x, y, p, q) described above decreases) and becomes smaller as continuity of disparities in the horizontal direction and in the vertical direction increases (as the Dpx and Dqy described above decrease).

Note that equation (10) basically has a similar meaning to that of equation (6) and is specialized for a case where a line of interest is the uppermost line and Fp(x) and Fq(x) have no value as described above.

As described above, with the stereoscopic image processing apparatus of this embodiment, disparity estimation can be performed with fewer errors even for an image in which a disparity has a vertical component and the pattern of the image is not distinct, by estimating a horizontal component and a vertical component of a disparity when disparity estimation is performed and by performing smoothing in the horizontal direction or smoothing in the horizontal and vertical directions for a disparity when disparity estimation is performed. In particular, errors in estimation of a horizontal component of a disparity can be reduced by also estimating a vertical component of a disparity. Note that, in the foregoing example in which only continuity in the horizontal direction is used, the example is given in which continuity in the horizontal direction relating to a horizontal component of a disparity is used for calculation of an evaluation value. It may be configured so as to also use continuity in the vertical direction relating to a disparity horizontal component by referring to the description given here.

The example is given above in which an evaluation value is calculated by using continuity in the horizontal direction without using continuity in the vertical direction, or by using continuity in the horizontal direction and continuity in the vertical direction. An evaluation value can be also calculated by using continuity in the vertical direction without using continuity in the horizontal direction. That is, an evaluation value can be calculated by using continuity between a disparity of a pixel of interest and a disparity of a pixel vertically adjacent to the pixel of interest. For example, by simply using equation (6) in which Dpx and Dqx are always set to 0, only continuity in the vertical direction can be used and smoothing can be performed only in the vertical direction for a disparity.

<Second Embodiment>

A second embodiment is a modification of the first embodiment, in which a search range of a disparity vertical component is modified. In general, lens distortion becomes larger in a part further away from the center of an image, and a disparity vertical component generated in accordance with the angle of an optical axis when an image is captured using a crossover method becomes larger in a part further away from the center of an image as long as the distance to the object is constant. Therefore, in the case where characteristics of a camera used for image capturing, such as the optical axis or a lens thereof, are known in advance through measurement, for example, a distribution tendency of disparity vertical components can be predicted.

In this embodiment, the evaluation value calculation unit 12 varies, in the case where a distribution tendency of disparity vertical components in an image is known in advance, a search range of a vertical component (that is, the range in the vertical direction in the foregoing predetermined region) of a disparity between viewpoint images on the basis of the tendency and in accordance with coordinates. That is, the evaluation value calculation unit 12 of the second embodiment varies a search range relating to a vertical component of a disparity between viewpoint images in accordance with the coordinates of a pixel of interest.

For example, for an image in which it is known that a part near the center of the image has a small disparity vertical component, expressions (11) below is used instead of the range ($-Q \leq q \leq Q$) used for obtaining min in equation (2). Here, w and h are the number of horizontal pixels and the number of vertical pixels respectively.

[Math. 7]

$$\begin{cases} -Q/2 \leq q \leq Q/2 \ , \ (\text{When } \frac{1}{4}w \leq x \leq \frac{3}{4}w \text{ and } \frac{1}{4}h \leq y \leq \frac{3}{4}h \ ) \\ -Q \leq q \leq Q \ , \ \text{otherwise} \end{cases} \quad \cdots (11)$$

As described above, with the stereoscopic image processing apparatus of this embodiment, disparity estimation can be performed with fewer errors by varying, in the case where a distribution tendency of disparity vertical components in an image is known in advance, a search range of a disparity vertical component on the basis of the tendency and in accordance with coordinates.

In the second embodiment, as a more preferable example, a search range of a disparity horizontal component in the first embodiment can be modified. That is, in the case where a distribution tendency of disparity horizontal components in an image is known in advance, disparity estimation can be performed with fewer errors similarly by varying a search range of a disparity vertical component between viewpoint images (that is, the range in the horizontal direction in the foregoing predetermined region) on the basis of the tendency and in accordance with coordinates. Note that, in general, lens distortion becomes larger in a part further away from the center of an image, and a disparity horizontal component generated in accordance with the angle of an optical axis when an image is captured using a crossover method becomes larger in a part further away from the center of an image as long as the distance to the object is constant. Therefore, a distribution tendency can also be predicted for disparity horizontal components. Furthermore, only one of the processing of varying a search range of a disparity horizontal component and the processing of varying a search range of a disparity vertical component described above may be used.

<Third Embodiment>

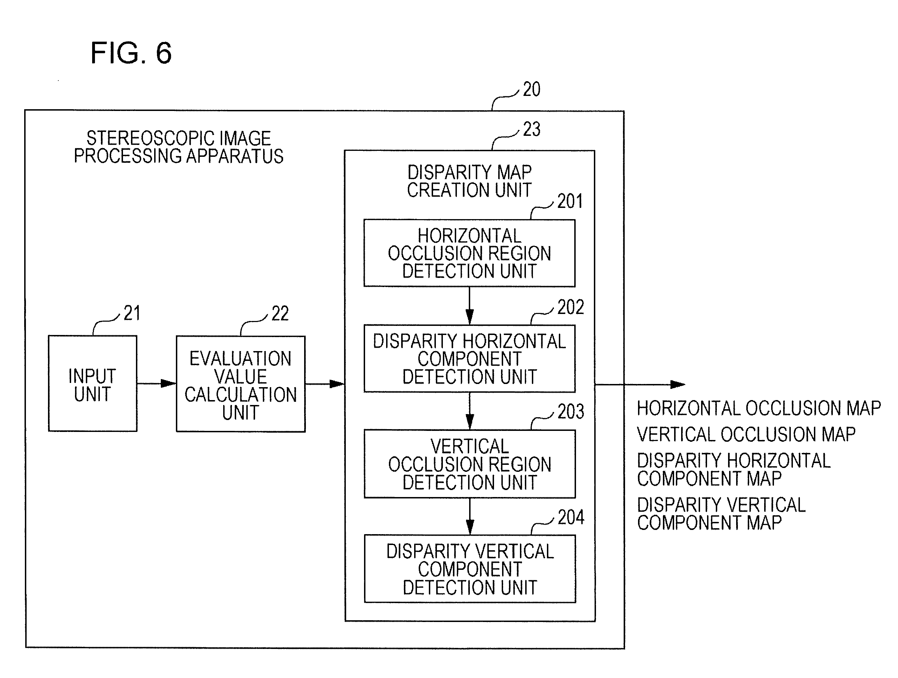

A third embodiment is a modification of the first embodiment such that both of a horizontal occlusion region and a vertical occlusion region can be detected. As a matter of course, the third embodiment described here can be adopted together with the second embodiment. Fig. 6 is a block diagram illustrating an example of a schematic configuration of the stereoscopic image processing apparatus according to the third embodiment of the present invention.

As illustrated in Fig. 6, a stereoscopic image processing apparatus 20 of this embodiment includes an input unit 21, an evaluation value calculation unit 22, and a disparity map creation unit 23. The disparity map creation unit 23 includes a horizontal occlusion region detection unit 201, a disparity horizontal component detection unit 202, a vertical occlusion region detection unit 203, and a disparity vertical component detection unit 204 that respectively generate and output a horizontal occlusion map, a disparity horizontal component map, a vertical occlusion map, and a disparity vertical component map. A horizontal occlusion map, a vertical occlusion map, a disparity horizontal component map, and a disparity vertical component map are collectively referred to as a disparity map. In this embodiment, disparity estimation is performed on lines one by one in order from the uppermost line, in which a vertical component $Fq(x)$ of a disparity obtained from the preceding line and an occlusion flag $Fc(x)$ obtained from the preceding line are used.

The input unit 21 is similar to the input unit 11 of the first embodiment. The evaluation value calculation unit 22 first calculates a similarity $M(x, y, p, q)$ for a line of interest $y$ as in equation (1) of the first embodiment. Next, the evaluation value calculation unit 22 calculates an evaluation value $U(x, p)$ for every $(x, p)$ that satisfies $0 \le x \le w-1$ and $0 \le p \le P$ in accordance with equation (12) below. In the procedure of calculation, equation (12) is used and calculation is performed for $x = 0$ first and then calculation is performed for $x = 1$ to $x = w-1$ in order. $Ax$ is a set of $(x, p)$ that satisfies equation (4) as in the first embodiment. Equation (12) is recursive and therefore $U(w-1, p)$ that is obtained lastly is an evaluation value for a combination of disparity values in the line of interest. Because of $0 \le p \le P$, $P+1$ pieces of $U(w-1, p)$ are obtained, which represent evaluation values of $P+1$ patterns of paths.

[Math. 8]

$$U(x,p) = \begin{cases} \min_{(yb,qb) \in Ay} \left[ M'(x,yb,p,qb) \right], & (x = 0) \\ \min_{(yb,qb) \in Ay} \left[ M'(x,yb,p,qb) \right] + \min_{(xb,pb) \in Ax} \left[ U(xb,pb) + Dpx(p,pb) \right] - c_0, & (x \ne 0) \end{cases} \quad \cdots (12)$$

Here, M' is a function expressed by the following equation.

$$M'(x,yb,p,qb) = \begin{cases} M(x,yb,p,qb), & (yb = y) \\ \min_{0 \le p' \le P} \left[ M(x,yb,p',qb) \right], & (yb \ne y) \end{cases} \quad \cdots (13)$$

$Ay$ is a set of $(y, q)$ that satisfies the following equation.

$$Ay = \begin{cases} \text{When } Fc(x) = 0, \\ \quad \begin{cases} (y,Fq(x)),(y,Fq(x)+1),\cdots,(y,Q), \\ (y+1,Fq(x)-1),(y+2,Fq(x)-2),\cdots,(y+Fq(x)+Q,-Q) \end{cases} \\ \text{When } Fc(x) \ne 0, \\ \quad \begin{cases} (y,Fq(x)-Fc(x)), \\ (y+1,Fq(x)-Fc(x)-1),(y+2,Fq(x)-Fc(x)-2),\cdots,(y+Fq(x)-Fc(x)+Q,-Q) \end{cases} \end{cases} \quad \cdots (14)$$

$Ay$ in equation (14) represents, under the assumption that a disparity horizontal component of a pixel of interest (coordinates $(x, y)$) in a line of interest $y$ in a right-eye image is $p$, candidates of a disparity vertical component.

When $Fc(x) = 0$, a pixel $(x, y-1)$ adjacently lying above the pixel of interest does not correspond to a horizontal occlusion region or a vertical occlusion region and a disparity vertical component of the pixel adjacently lying above the pixel of interest is $Fq(x)$. A disparity horizontal component of the pixel adjacently lying above the pixel of interest is denoted by $Fp$. Then, the pixel $(x, y-1)$ in the right-eye image corresponds to a pixel $(x+Fp, y-1+Fq(x))$ in a left-eye image. Elements of $Ay$ in this case are divided into three groups and described.

13

[i] Element (y, Fq(x))

This element represents a case where a disparity vertical component of a pixel (x, y-1) adjacently lying above a pixel of interest is equal to that of the pixel of interest. A pixel (x, y) in a right-eye image corresponds to a pixel (x+p, y+Fq(x)) in a left-eye image.

[ii] Elements (y, Fq(x)+1), ..., (y, Q)

These elements represent a case where a disparity vertical component of a pixel of interest is larger than that of a pixel adjacently lying above the pixel of interest. For example, an element (y, Fq(x)+2) expresses a pixel (x, y) in a right-eye image corresponding to a pixel (x+p, y+ Fq(x)+2) in a left-eye image. In this case, it is considered that two pixels (x+p, y+Fq(x)) and (x+p, y+ Fq(x)+1) in the left-eye image do not have corresponding points in the right-eye image, which is a case where a vertical occlusion region is present in the left-eye image.

[iii] Elements (y+1, Fq(x)-1), ..., (y+Fq(x)+Q, -Q)

These elements represent a case where a pixel of interest corresponds to a vertical occlusion region. In this case, a pixel in a right-eye image is selected that corresponds to a pixel (x+p', y+Fq(x)) in a left-eye image. For example, an element (y+2, Fq(x)-2) expresses a pixel (x, y+2) in a right-eye image corresponding to a pixel (x+p', y+Fq(x)) in a left-eye image. In this case, two pixels (x, y) and (x, y+1) in the right-eye image do not have corresponding points in the left-eye image and therefore correspond to a vertical occlusion region. A difference in a disparity vertical component between (x, y-1) and (x, y+2) in the right-eye image is two, which is equal to the vertical width of the vertical occlusion region. That is, constraints are applied so that the vertical width of a vertical occlusion region is equal to a difference in a disparity vertical component between pixels lying on the upper side and on the lower side of the vertical occlusion region respectively.

When Fc(x) ≠ 0, a pixel adjacently lying above a pixel of interest corresponds to a horizontal occlusion region or a vertical occlusion region. Fc(x)+1 expresses the distance from a pixel of interest to a pixel adjacent to the upper end of an occlusion region, and a disparity vertical component of the pixel adjacent to the upper end is retained in Fq(x). A disparity horizontal component of the pixel adjacent to the upper end is denoted by Fp. Then, (x, y-1-Fc(x)) in a right-eye image corresponds to (x+Fp, y-1-Fc(x)+Fq(x)) in a left-eye image. Elements of Ay in this case are divided into two groups and described.

[iv] Element (y, Fq(x)-Fc(x))

This element represents a case where a pixel of interest does not correspond to a vertical occlusion region. (x, y) in a right-eye image corresponds to (x+p, y+Fq(x)-Fc(x)) in a left-eye image. A disparity vertical component of a pixel of interest is expressed by Fq(x)-Fc(x), and a difference in a disparity vertical component between the pixel of interest and a pixel adjacent to the upper end of a vertical occlusion region is Fc(x), which is equal to the vertical width of the vertical occlusion region.

[v] Elements (y+1, Fq(x)-Fc(x)-1), ..., (y+Fq(x)-Fc(x)+Q, -Q)

These elements represent a case where a pixel of interest corresponds to a vertical occlusion region. In this case, a pixel in a right-eye image is selected that corresponds to (x+p', y+Fq(x)-Fc(x)) in a left-eye image.

When equation (12) is calculated, the values of yb and qb obtained by giving minimum values using min(yb, qb), that is, the values of yb and qb when M'(x, y, p, q) is at a minimum, are retained in Ky(x, p) and Kq(x, p) respectively. As in the first embodiment, the values of xb and pb obtained by giving minimum values using min(xb, pb) are retained in Kx(x, p) and Kp(x, p) respectively. Note that, in the case where a line of interest is the uppermost line of an image, Fq(x) and Fc(x) have no value and therefore equation (2) is used instead of equation (12). Kx, Kp, Ky, and Kq represent a path relating to an evaluation value U. The technical meanings of equations (12) to (14) are described later.

The disparity map creation unit 23 detects a horizontal component and a vertical component of a disparity on the basis of an evaluation value that has been calculated. It also determines whether or not each pixel in a line of interest corresponds to an occlusion region simultaneously with detection of a horizontal component and a vertical component of a disparity, by using an evaluation value U(w-1, p) that has been calculated and Kx(x, p), Kp(x, p), and Kq(x, p). In determination of an occlusion region, both of a vertical occlusion and a horizontal occlusion are determined.

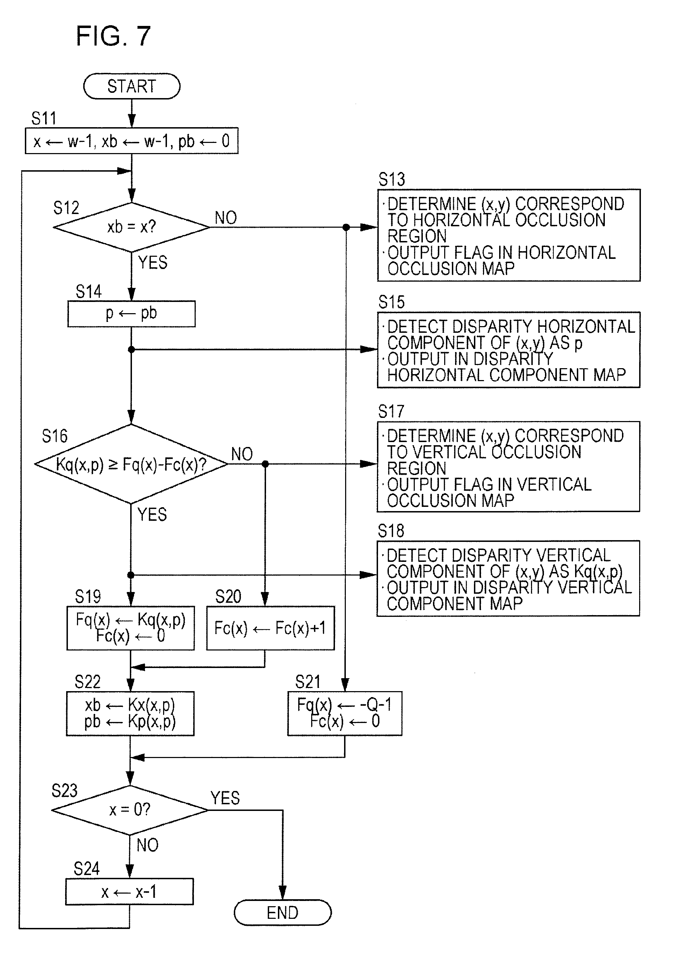

An example of a flow of processing performed by the disparity map creation unit 23 is described with reference to Fig. 7. The example illustrates a case where U(w-1, 0) is the minimum value. First, in step S11, the values of variables x, xb, and pb are initialized. The initialization is performed as in the description of step S1 in Fig. 5.

Next, in step S12, the values of xb and x are compared. If the values are not equal, the flow proceeds to step S13. In step S13, it is determined that coordinates (x, y) correspond to a horizontal occlusion and a flag indicating that the coordinates fall under a horizontal occlusion region is outputted in a horizontal occlusion map. Then, in step S21, the values of Fq(x) and Fc(x) are updated with -Q-1 and 0 respectively and the flow proceeds to step S23.

In step S12, if the values are equal, the flow proceeds to step S14 and the value of pb is set in p. In step S15, the value of a disparity horizontal component of the coordinates (x, y) is detected as p and outputted in a disparity horizontal component map.

Next, in step S16, a disparity vertical component Kq(x, p) of the coordinates (x, y) is compared with a difference obtained by subtracting the width of a vertical occlusion region of the preceding line from a disparity vertical component of the preceding line, that is, the value expressed by Fq(x)-Fc(x). If Kq(x, p) is equal to or larger than Fq(x)-Fc(x), that is, if the evaluation value calculation unit 22 has selected any one of elements [i], [ii], and [iv] of Ay, the value of a disparity vertical component of the coordinates (x, y) is detected as Kq(x, p) and outputted in a disparity vertical component map in step S18. After step S18, the values of Fq(x) and Fc(x) are updated with Kq(x, p) and 0 respectively in step S19 and the values of xb and pb are updated with Kx(x, p) and Kp(x, p) respectively in step S22.

If Kq(x, p) is smaller than Fq(x)-Fc(x) in step S16, that is, if the evaluation value calculation unit 22 has selected an element [iii] or [v] of Ay, the flow proceeds to step S17. In step S17, it is determined that the coordinates (x, y) correspond to a vertical occlusion and a flag indicating that the coordinates fall under a vertical occlusion region is outputted in a vertical occlusion map. After step S17, in step S20, the value of Fc is updated so as to be increased by 1. In step S22, the values of xb and pb are updated with Kx(x, p) and Kp(x, p) respectively. Here, the value of Fq(x) is not updated and remained as it is.

Lastly, after the processing in step S21 and after the processing in step S22, it is determined whether or not x = 0 in step S23. If x = 0, the processing in Fig. 7 ends because processing has been performed up to the leftmost pixel. Otherwise, in step S24, processing of moving to an immediate left pixel is performed and the flow returns to step S12. Note that, in the case where a line of interest is the uppermost line of an image, initialization is performed in advance so as to be Fq(x) = -Q-1 and Fc(x) = 0. -Q-1 in step S21 is a value smaller than a range of the value that Kq(x, p) may have, that is, a search range of a vertical component of a disparity, and is a value used in order to determine that Kq(x, p) is equal to or larger than Fq(x)-Fc(x) when the processing in step S16 is performed next time.

In the processing described above, steps S12 and S13 are processing of determining a horizontal occlusion region and this processing in steps S12 and S13 is performed together by the horizontal occlusion region detection unit 201. Steps S14 and S15 are processing of detecting a disparity horizontal component and this processing in steps S14 and S15 is performed together by the disparity horizontal component detection unit 202. Steps S16 and S17 are processing of determining a vertical occlusion region and this processing in steps S16 and S17 is performed together by the vertical occlusion region detection unit 203. Step S18 is processing of detecting a disparity vertical component and this processing is performed by the disparity vertical component detection unit 204.

In this way, disparities of all pixels in a line of interest are estimated and a horizontal occlusion region and a vertical occlusion region in the line are simultaneously detected. By performing the evaluation value calculation unit 22 and the disparity map creation unit 23 on all lines, a disparity of the entire image is estimated and a disparity map is created.

Next, the technical meanings of the foregoing equations (12) to (14) are described.

The term min(yb, pb) in equation (12) has an effect of searching for a vertical component of a disparity. By using equation (13) and the range of Ay defined by equation (14), evaluation values are accumulated not by using a similarity of an occlusion region in the vertical direction but by using a similarity of a pixel adjacent to the lower end of an occlusion region instead.

In equation (13), M(x, yb, p, qb) is used as it is as a similarity in the case of yb = y, that is, in the case of not being a vertical occlusion region, and a similarity of a pixel adjacent to the lower end of a vertical occlusion region is used in the case of yb ≠ y, that is, in the case of being a vertical occlusion region. When equation (13) is calculated, a disparity horizontal component of a pixel adjacent to the lower end of an occlusion region has not been detected yet and therefore a similarity that is a minimum similarity in a disparity horizontal component search range, which is obtained by using min(p'), is used.

The set Ay expressed by equation (14) is provided for constraining the magnitude of a difference in a disparity vertical component between a pixel adjacent to the upper end of a vertical occlusion region and a pixel adjacent to the lower end of the vertical occlusion region to be equal to the vertical width of the vertical occlusion region. That is, here, the evaluation value calculation unit 22 calculates an evaluation value under the condition that the magnitude of a difference in a disparity vertical component between a pixel adjacent to the upper side of a vertical occlusion region and a pixel adjacent to the lower side of the vertical occlusion region is equal to the vertical width of the vertical occlusion region. This has an effect of reducing errors in occlusion region detection and disparity estimation.

The evaluation value U(w-1, p) in equation (12) is calculated on the basis of the total of added values each obtained by adding together a minimum value among similarities, obtained in a vertical component search range, of all pixels except pixels estimated to correspond to a horizontal occlusion region and the value that represents continuity, in the horizontal direction, of disparity horizontal components. The evaluation value calculation unit 22 calculates an evaluation value by using pixel similarity between viewpoint images and continuity of disparities in the horizontal direction between viewpoint images. It is found that an evaluation value calculated by the evaluation value calculation unit 22 becomes smaller as pixel similarity between viewpoint pixels increases (as the M'(x, yb, p, qb) described above decreases) and becomes smaller as continuity of disparities in the horizontal direction increases (as the Dpx described above decreases).

Also in this embodiment, equation (12) may be modified as in equation (6) so as to calculate an evaluation value by also using continuity of disparities in the vertical direction between viewpoint images. In this way, an evaluation value calculated by the evaluation value calculation unit 22 becomes smaller as pixel similarity between viewpoint pixels increases (as the M'(x, yb, p, qb) described above decreases) and becomes smaller as continuity of disparities in the horizontal and vertical directions increases (as the Dpx, Dpy, Dqx, and Dqy described above decrease).

As described above, with the stereoscopic image processing apparatus of this embodiment, disparity estimation can be performed with much fewer errors even for an image in which a disparity has a vertical component, by detecting a vertical occlusion region simultaneously when disparity estimation is performed.

<Regarding First to Third Embodiments>

As described in the embodiments of the present invention above, the example is given in which a plurality of viewpoint images received by the input unit 11 are constituted by two viewpoint images, that is, a left-eye image and a right-eye image respectively captured by cameras that are arranged horizontally. However, the number of viewpoint images is not limited to two and, even in the case where the number of viewpoint images is three or more, a disparity among viewpoint images can be estimated similarly by performing the processing described in the embodiments. For example, a disparity of a viewpoint image relative to another viewpoint image that serves as a reference can also be estimated and a disparity can be estimated for every combination of the viewpoint images. The same applies to estimation of an occlusion region.

A disparity or an occlusion region can also be estimated similarly for a plurality of viewpoint images respectively captured by cameras that are arranged vertically. In this case, the processing described in the embodiments can be applied as it is or the processing can be applied while the processing for the vertical direction and the processing for the horizontal direction are interchanged with each other. Furthermore, a disparity or an occlusion region can also be estimated similarly for a plurality of viewpoint images respectively captured by cameras that are arranged diagonally.

In the embodiments of the present invention, the example is given in which processing relating to disparity estimation is performed on each line by using dynamic programming. However, in addition to dynamic programming, other techniques, such as block matching or graph cut, may be used.

The present invention is not limited to the foregoing embodiments. Any embodiment obtained by combining, as appropriate, the technical means disclosed in the respective embodiments is also included in the technical scope of the present invention.

The stereoscopic image processing apparatus according to the first to third embodiments of the present invention can be incorporated into image output apparatuses, such as various recorders and various recording media reproducing apparatuses. Furthermore, the present invention can take a form of a stereoscopic image display apparatus, such as a television apparatus or a monitor apparatus, which is formed of the stereoscopic image processing apparatus and a display device externally connected thereto or mounted therein.

The stereoscopic image processing apparatuses according to the embodiments including the stereoscopic image processing apparatuses 10 and 20 respectively illustrated in Figs. 3 and 6 can be implemented by using hardware devices, such as a microprocessor (or DSP: Digital Signal Processor), a memory, a bus, an interface, and a peripheral device, and software that can be executed on these hardware devices. Some or all of the foregoing hardware devices can be mounted as an integrated circuit/IC chipset. In this case, it is sufficient that the software be stored in a memory. All of the elements of the present invention may be configured by using hardware devices. Also in this case, some or all of the hardware devices can be mounted as an integrated circuit/IC chipset.

The stereoscopic image processing apparatus according to the embodiments can be simply configured by using a CPU (Central Processing Unit), a storage device, such as a RAM (Random Access Memory) serving as a work space, a ROM (Read Only Memory) serving as a storage space of a program for control, or an EEPROM (Electrically Erasable Programmable ROM), and the like. In this case, the program for control includes a stereoscopic image processing program, which is described later, for performing the processing of the present invention. The stereoscopic image processing program can be incorporated into a PC as application software for stereoscopic image processing to cause the PC function as a stereoscopic image processing apparatus. Furthermore, the stereoscopic image processing program may be stored in an external server, such as a Web server, in a state where the program is executable by a client PC.

The stereoscopic image processing apparatus according to the present invention is mainly described above. As the embodiments illustrate the flows of control performed in the stereoscopic image processing apparatus, the present invention can take a form of a stereoscopic image processing method. The stereoscopic image processing method is a stereoscopic image processing method that estimates, from a plurality of viewpoint images, a horizontal component and a vertical component of a disparity between viewpoint images. The method includes a step of an evaluation value calculation unit calculating an evaluation value relating to pixel similarity between viewpoint images and disparity continuity between viewpoint images and a step of a disparity map creation unit detecting a combination of pixels between viewpoint images, for which the evaluation value is a minimum evaluation value, as a disparity and creating a disparity map having a horizontal component and a vertical component. Here, disparity continuity is continuity between a disparity of a pixel of interest and a disparity of a pixel horizontally adjacent to the pixel of interest and/or a disparity of a pixel vertically adjacent to the pixel of interest. In the step of calculating an evaluation value, a calculated evaluation value becomes smaller as pixel similarity increases and becomes smaller as disparity continuity increases. Other application examples are as per the description given for the stereoscopic image processing apparatus.

The present invention can take a form of a stereoscopic image processing program for causing a computer to execute the stereoscopic image processing method. That is, the stereoscopic image processing program is a program for causing a computer to execute stereoscopic image processing that estimates, from a plurality of viewpoint images, a horizontal component and a vertical component of a disparity between viewpoint images. The stereoscopic image processing includes a step of calculating an evaluation value relating to pixel similarity between viewpoint images and disparity continuity between viewpoint images and a step of detecting a combination of pixels between viewpoint images, for which the evaluation value is a minimum evaluation value, as a disparity and creating a disparity map having a horizontal component and a vertical component. Here, disparity continuity is continuity between a disparity of a pixel of interest and a disparity of a pixel horizontally adjacent to the pixel of interest and/or a disparity of a pixel vertically adjacent to the pixel of interest. In the step of calculating an evaluation value, a calculated evaluation value becomes smaller as pixel similarity increases and becomes smaller as disparity continuity increases. Other application examples are as per the description given for the stereoscopic image processing apparatus.

Furthermore, a form as a program recording medium can be easily understood, the form being such that the stereoscopic image processing program is recorded in a computer-readable recording medium. As a computer, various forms of computers, such as a microcomputer or a general-purpose, programmable integrated circuit/chipset as described above, can be applied, in addition to a general-purpose PC. The program can be distributed not only via a portable recording medium but also over a network such as the Internet or by using broadcast waves. Reception over a network means reception of a program recorded in a storage device of an external server or the like. Reference Signs List

| | |
|---|---|
| 1L, 2L | left-eye image |
| 1R, 2R | right-eye image |
| 10, 20 | stereoscopic image processing apparatus |
| 11, 21 | input unit |
| 12, 22 | evaluation value calculation unit |
| 13, 23 | disparity map creation unit |
| 101 | occlusion region detection unit |
| 102, 202 | disparity horizontal component detection unit |
| 103, 204 | disparity vertical component detection unit |
| 201 | horizontal occlusion region detection unit |
| 203 | vertical occlusion region detection unit |

**Claims**

1. A stereoscopic image processing apparatus that estimates, from a plurality of viewpoint images, a horizontal component and a vertical component of a disparity between viewpoint images, comprising:

   an evaluation value calculation unit that calculates an evaluation value relating to pixel similarity between the viewpoint images and disparity continuity between the viewpoint images; and a disparity map creation unit that selects a combination of disparities of each pixel, for which the evaluation value is a minimum evaluation value, as a disparity of the pixel and creates a disparity map having a horizontal component and a vertical component, wherein

   the disparity continuity is continuity between a disparity of a pixel of interest and a disparity of a pixel horizontally adjacent to the pixel of interest and/or a disparity of a pixel vertically adjacent to the pixel of interest, and the evaluation value that is calculated by the evaluation value calculation unit becomes smaller as the pixel similarity increases and becomes smaller as the disparity continuity increases.

2. The stereoscopic image processing apparatus according to Claim 1, wherein the pixel similarity is similarity between a pixel in a region surrounding a predetermined region including a pixel of interest in one viewpoint image and a pixel in a region surrounding a predetermined region including a pixel, in the other viewpoint image, corresponding to the pixel of interest.

3. The stereoscopic image processing apparatus according to Claim 1 or 2, wherein the pixel similarity is calculated by using at least a pixel luminance value.

4. The stereoscopic image processing apparatus according to any one of Claims 1 to 3, wherein the disparity continuity is calculated for a horizontal component and/or a vertical component of a disparity.

5. The stereoscopic image processing apparatus according to any one of Claims 1 to 4, wherein the disparity map creation unit includes an occlusion region detection unit that detects an occlusion region on the basis of the evaluation value.

6. The stereoscopic image processing apparatus according to Claim 5, wherein the occlusion region detection unit detects both of a horizontal occlusion region and a vertical occlusion region on the basis of the evaluation value.

7. The stereoscopic image processing apparatus according to Claim 5 or 6, wherein the occlusion region detection unit detects at least a horizontal occlusion region on the basis of the evaluation value, and
the evaluation value calculation unit calculates the evaluation value under a condition that a magnitude of a difference in a disparity horizontal component between a pixel adjacent to a right side of the horizontal occlusion region and a pixel adjacent to a left side of the horizontal occlusion region is equal to a horizontal width of the horizontal occlusion region.

8. The stereoscopic image processing apparatus according to Claim 5 or 6, wherein the occlusion region detection unit detects at least a vertical occlusion region on the basis of the evaluation value, and
the evaluation value calculation unit calculates the evaluation value under a condition that a magnitude of a difference in a disparity vertical component between a pixel adjacent to an upper side of the vertical occlusion region and a pixel adjacent to a lower side of the vertical occlusion region is equal to a vertical width of the vertical occlusion region.

9. The stereoscopic image processing apparatus according to any one of Claims 1 to 8, wherein the evaluation value calculation unit varies a search range relating to a vertical component of a disparity between the viewpoint images in accordance with coordinates of a pixel of interest.

10. The stereoscopic image processing apparatus according to any one of Claims 1 to 8, wherein the evaluation value calculation unit varies a search range relating to a horizontal component of a disparity between the viewpoint images in accordance with coordinates of a pixel of interest.

11. A stereoscopic image processing method that estimates, from a plurality of viewpoint images, a horizontal component and a vertical component of a disparity between viewpoint images, comprising:

a step of calculating an evaluation value relating to pixel similarity between the viewpoint images and disparity continuity between the viewpoint images; and a step of selecting a combination of disparities of each pixel, for which the evaluation value is a minimum evaluation value, as a disparity of the pixel and creating a disparity map having a horizontal component and a vertical component, wherein
the disparity continuity is continuity between a disparity of a pixel of interest and a disparity of a pixel horizontally adjacent to the pixel of interest and/or a disparity of a pixel vertically adjacent to the pixel of interest, and
the evaluation value that is calculated in the step of calculating an evaluation value becomes smaller as the pixel similarity increases and becomes smaller as the disparity continuity increases.

12. A program for causing a computer to execute stereoscopic image processing that estimates, from a plurality of viewpoint images, a horizontal component and a vertical component of a disparity between viewpoint images, the stereoscopic image processing comprising:

a step of calculating an evaluation value relating to pixel similarity between the viewpoint images and disparity continuity between the viewpoint images; and a step of selecting a combination of disparities of each pixel, for which the evaluation value is a minimum evaluation value, as a disparity of the pixel and creating a disparity map having a horizontal component and a vertical component, wherein
the disparity continuity is continuity between a disparity of a pixel of interest and a disparity of a pixel horizontally adjacent to the pixel of interest and/or a disparity of a pixel vertically adjacent to the pixel of interest, and
the evaluation value that is calculated in the step of calculating an evaluation value becomes smaller as the pixel similarity increases and becomes smaller as the disparity continuity increases.

## FIG. 1A

## FIG. 1B

FIG. 2A

2L

FIG. 2B

2R

## FIG. 3

STEREOSCOPIC IMAGE
PROCESSING APPARATUS — 10

DISPARITY MAP
CREATION UNIT — 13

OCCLUSION
REGION
DETECTION UNIT — 101

INPUT
UNIT — 11

EVALUATION
VALUE
CALCULATION
UNIT — 12

DISPARITY
HORIZONTAL
COMPONENT
DETECTION UNIT — 102

DISPARITY
VERTICAL
COMPONENT
DETECTION UNIT — 103

OCCLUSION MAP

DISPARITY HORIZONTAL
COMPONENT MAP

DISPARITY VERTICAL
COMPONENT MAP

## FIG. 4

## FIG. 5

START

S1
$x \leftarrow w-1, xb \leftarrow w-1, pb \leftarrow 0$

S2
$xb = x?$

NO → S3
·DETERMINE $(x,y)$ CORRESPOND TO OCCLUSION REGION
·OUTPUT FLAG IN OCCLUSION MAP

YES

S4
$p \leftarrow pb$

S5
·DETECT DISPARITY HORIZONTAL COMPONENT OF $(x,y)$ AS $p$
·OUTPUT IN DISPARITY HORIZONTAL COMPONENT MAP

S6
·DETECT DISPARITY VERTICAL COMPONENT OF $(x,y)$ AS $Kq(x,p)$
·OUTPUT IN DISPARITY VERTICAL COMPONENT MAP

S7
$xb \leftarrow Kx(x,p)$
$pb \leftarrow Kp(x,p)$

S8
$x = 0?$

YES → END

NO

S9
$x \leftarrow x-1$

# FIG. 6

STEREOSCOPIC IMAGE PROCESSING APPARATUS — 20

DISPARITY MAP CREATION UNIT — 23

HORIZONTAL OCCLUSION REGION DETECTION UNIT — 201

DISPARITY HORIZONTAL COMPONENT DETECTION UNIT — 202

VERTICAL OCCLUSION REGION DETECTION UNIT — 203

DISPARITY VERTICAL COMPONENT DETECTION UNIT — 204

INPUT UNIT — 21

EVALUATION VALUE CALCULATION UNIT — 22

HORIZONTAL OCCLUSION MAP
VERTICAL OCCLUSION MAP
DISPARITY HORIZONTAL COMPONENT MAP
DISPARITY VERTICAL COMPONENT MAP

EP 2 755 391 A1

## FIG. 7

START

S11
$x \leftarrow w\text{-}1, xb \leftarrow w\text{-}1, pb \leftarrow 0$

S12
$xb = x?$ — NO →

S13
· DETERMINE (x,y) CORRESPOND TO HORIZONTAL OCCLUSION REGION
· OUTPUT FLAG IN HORIZONTAL OCCLUSION MAP

YES

S14
$p \leftarrow pb$

S15
· DETECT DISPARITY HORIZONTAL COMPONENT OF (x,y) AS p
· OUTPUT IN DISPARITY HORIZONTAL COMPONENT MAP

S16
$Kq(x,p) \geq Fq(x)\text{-}Fc(x)?$ — NO →

S17
· DETERMINE (x,y) CORRESPOND TO VERTICAL OCCLUSION REGION
· OUTPUT FLAG IN VERTICAL OCCLUSION MAP

YES

S18
· DETECT DISPARITY VERTICAL COMPONENT OF (x,y) AS Kq(x,p)
· OUTPUT IN DISPARITY VERTICAL COMPONENT MAP

S19
$Fq(x) \leftarrow Kq(x,p)$
$Fc(x) \leftarrow 0$

S20
$Fc(x) \leftarrow Fc(x)\text{+}1$

S22
$xb \leftarrow Kx(x,p)$
$pb \leftarrow Kp(x,p)$

S21
$Fq(x) \leftarrow \text{-}Q\text{-}1$
$Fc(x) \leftarrow 0$

S23
$x = 0?$ — YES →

NO

S24
$x \leftarrow x\text{-}1$

END

## INTERNATIONAL SEARCH REPORT

| International application No. |
|---|
| PCT/JP2012/069216 |

A. CLASSIFICATION OF SUBJECT MATTER
*H04N13/04(2006.01)i*

According to International Patent Classification (IPC) or to both national classification and IPC

B. FIELDS SEARCHED

Minimum documentation searched (classification system followed by classification symbols)
H04N13/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-166757 A (Sony Corp.), 25 August 2011 (25.08.2011), paragraphs [0028] to [0045]; fig. 2 to 9 & US 2011/0134210 A1 & CN 102369735 A | 1-12 |
| A | JP 9-261653 A (Sharp Corp.), 03 October 1997 (03.10.1997), entire text; all drawings (Family: none) | 1-12 |
| A | JP 2003-85566 A (Nippon Hoso Kyokai), 20 March 2003 (20.03.2003), entire text; all drawings (Family: none) | 1-12 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 August, 2012 (22.08.12) | 04 September, 2012 (04.09.12) |

| Name and mailing address of the ISA/<br>Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2012/069216

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-245451 A  (Nippon Hoso Kyokai), 30 August 2002 (30.08.2002), entire text; all drawings (Family: none) | 1-12 |

Form PCT/ISA/210 (continuation of second sheet) (July 2009)

**EP 2 755 391 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003085566 A

**Non-patent literature cited in the description**

- **S. BIRCHFIELD ; C. TOMASI.** Depth Discontinuities by Pixel-to-Pixel Stereo. *International Journal of Computer Vision,* December 1999, vol. 35 (3), 269-293